# EUROPÄISCHE PATENTSCHRIFT

(11) **EP 0 982 968 B1**
(45) Veröffentlichungstag und Bekanntmachung des Hinweises auf die Patenterteilung: **18.07.2007**
(21) Anmeldenummer: 99116956.6
(22) Anmeldetag: 27.08.1999
(51) Int. Cl.: H04Q 11/04

(54) **Vermittlungs-Baugruppe**
Private branch exchange
Autocommutateur privé

(30) Priorität: 28.08.1998 DE 19839304
(43) Veröffentlichungstag der Anmeldung: 01.03.2000
(73) Patentinhaber: SIEMENS AKTIENGESELLSCHAFT, 80333 München (DE)
(72) Erfinder: Neuhaus, Ralf, 44534 Lünen (DE); Kramer, Thilo, 45279 Essen (DE)

(56) Entgegenhaltungen:
- EP-A- 0 659 007
- DE-U- 29 716 846
- US-A- 5 649 005

## Beschreibung

Die Erfindung betrifft eine Vermittlungs-Baugruppe zum Anschluß an eine Datenverarbeitungseinrichtung gemäß dem Oberbegriff des Patentanspruchs 1.

Unter dem Namen "Hicom Integrated" ist eine Vermittlungs-Baugruppe der Firma Siemens für einen Personal Computer - in der Literatur häufig mit PC abgekürzt - bekannt, mittels der die Funktionalität einer ISDN-Vermittlungsanlage (Integrated Services Digital Network) in einen Personal Computer integrierbar ist. Die Vermittlungs-Baugruppe ist über einen sogenannten ISA-Einsteckplatz (Industry Standard Architecture) - in der Literatur häufig mit 'ISA-Slot' bezeichnet - auf einer Hauptplatine des Personal Computers - in der Literatur häufig mit 'Motherboard' bezeichnet - einsteckbar. Die bekannte Vermittlungs-Baugruppe weist vier digitale und vier analoge Teilnehmerschnittstellen für einen Anschluß von bis zu acht Kommunikationsendgeräten auf. Des weiteren weist die Vermittlungs-Baugruppe zwei ISDN-orientierte S₀-Anschlüsse für eine Verbindung mit einem ISDN-Kommunikationsnetz auf. Jeder S₀-Anschluß hat zum einen 2 Nutzdatenkanäle, welche als ISDN-orientierte B-Kanäle mit einer Datenübertragungsrate von 64 kBit/s ausgestaltet sind, und zum anderen einen Signalisierungskanal, welcher als ISDN-orientierter D-Kanal mit einer Übertragungsrate von 16 kBit/s ausgestaltet ist.

In diesem Zusammenhang offenbart die Patentschrift US 5,649,005 die Integration einer Einsteckkarte für ein Telefonsystem bzw. eine Privatvermittlungsanlage in einem Personalcomputer. Eine solche Karte beinhaltet einen Call Controler, ein Schaltnetzwerk und einen Schnittstellenbus-Controler um Datensignale zwischen einem PCl-Bus und einem internen Bus des Call Controlers auszutauschen, wobei die Einsteckkarte mit Resourcen des Personalcomputers kommunizieren kann, um Telekommunikationsfunktionen auszuführen.

Für einen über das ISDN-Kommunikationsnetz geführten Datentransfer von und zu einem Personal Computer, z.B. im Rahmen einer Datenübertragung auf Basis des IP-Protokolls (Internet Protokoll), wird eine weitere Einsteckkarte - in der Literatur häufig mit S₀-Karte bezeichnet - im Personal Computer benötigt. Diese weitere Einsteckkarte ist einerseits über einen ISDN-orientierten S₀-Anschluß mit der Vermittlungs-Baugruppe und andererseits über einen 'ISA-Slot' mit der Hauptplatine des Personal Computers verbunden. Durch diese weitere Einsteckkarte erfolgt eine bidirektionale Umsetzung zwischen dem Datenformat der S₀-Schnittstelle und dem Datenformat der ISA-Schnittstelle.

Durch den Anschluß der S₀-Karte an einen der beiden S₀-Anschlüsse der Vermittlungs-Baugruppe steht an dieser nur noch ein S₀-Anschluß für die Verbindung mit dem ISDN-Kommunikationsnetz zur Verfügung. Bei einem vom Personal Computer veranlaßten Datentransfer unter Beteiligung beider Nutzdatenkanäle (B-Kanäle) einer S₀-Schnittstelle ist die Übertragungskapazität erschöpft und ein Einleiten eines Verbindungsaufbaus von oder zu einem der an der Vermittlungs-Baugruppe angeschlossenen Kommunikationsendgeräte ist nicht mehr möglich. Besteht bereits eine Sprachverbindung über eine S₀-Schnittstelle, so ist eine über das ISDN-Kommunikationsnetz geführte Datenübertragung von oder zum Personal Computer nicht, oder nur noch mit einer verringerten Datenübertragungsrate realisierbar.

Der vorliegenden Erfindung liegt die Aufgabe zugrunde, eine Anordnung anzugeben, mittels der die Übertragungskapazität erhöht werden kann.

Gelöst wird die Aufgabe ausgehend von den Merkmalen des Oberbegriffs des Patentanspruchs 1 durch dessen kennzeichnende Merkmale.

Durch Verbindung einer, die Funktion der S₀-Karte realisierenden Kopplungseinheit mit einem baugruppeninternen Datenbus der Vermittlungs-Baugruppe, wird eine S₀-Karte nicht mehr benötigt, und der damit zur Verfügung stehende S₀-Anschluß kann anderweitig, z.B. für eine Datenübertragung über das ISDN-Kommunikationsnetz genutzt werden, so daß insgesamt die B-Kanäle aller S₀-Anschlüsse für eine Datenübermittlung über das ISDN-Kommunikationsnetz zur Verfügung stehen.

Ein weiterer Vorteil der Erfindung besteht darin, daß der Verdrahtungsaufwand für die Verbindung der S₀-Karte mit der Vermittlungs-Baugruppe entfällt und weiterhin der Strombedarf des Personal Computers durch den Wegfall der S₀-Karte reduziert wird.

Vorteilhafte Weiterbildungen der Erfindung sind in den Unteransprüchen angegeben.

Durch die Bereitstellung einer Datenübertragungsrate für 2 ISDN-orientierte B-Kanäle vom Personal Computer zur Vermittlungs-Baugruppe können zusatzlich zu einer über das ISDN-Kommunikationsnetz geführten Datenübertragung von oder zum Personal Computer über die verbleibenden 2 ISDN-orientierten B-Kanäle von und zu den an der Vermittlungs-Baugruppe angeschlossenen Kommunikationsendgeräten Sprachverbindungen aufgebaut werden.

Ein Ausführungsbeispiel der Erfindung wird im folgenden anhand der Zeichnung näher erläutert.

Dabei zeigen:
- Fig 1:: ein Strukturbild zur schematischen Darstellung der wesentlichen Funktionseinheiten der erfindungsgemäßen Anordnung;
- Fig 2:: ein Strukturbild zur schematischen Darstellung der wesentlichen Funkionseinheiten einer erfindungsgemäßen Vermittlungs-Baugruppe.

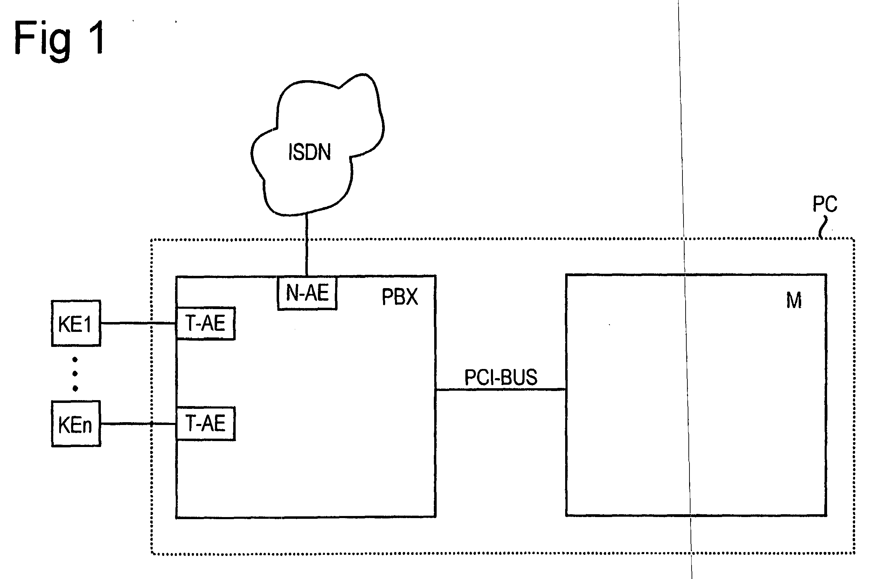

Fig 1 zeigt eine schematische Darstellung einer erfindungsgemäßen Vermittlungs-Baugruppe PBX, die über einen Datenbus PCI-BUS mit einem zentralen Bussystem - insbesondere einem PCI-Bus (Peripheral Component Interconnect) - einer Hauptplatine M eines Personal Computers PC verbunden ist. Alternativ kann die Vermittlungs-Baugruppe PBX über einen ISA-Einsteckplatz mit der Hauptplatine M des Personal Computers verbunden sein. Die Hauptplatine M des Personal Computers PC dient zur Verbindung von im Personal Computer PC angeordneten - in der Figur nicht dargestellten - Systemeinheiten, wie einer zentralen Steuerung - in der Literatur häufig mit 'Central Processing Unit' CPU bezeichnet, von Speichereinrichtungen, wie z.B. einer Festplatte oder einem Diskettenlaufwerk und von Eingabe-/Ausgabeschnittstellen z.B. für einen an den Personal Computer PC angeschlossenen Monitor oder Drucker.

Die Vermittlungs-Baugruppe PBX weist mehrere Teilnehmeranschlußeinheiten T-AE auf, über die analoge und digitale Kommunikationsendgeräte KE1, ..., KEn, wie z.B. ein unter dem Nahmen "Optiset" bekanntes Kommunikationsendgerät der Firma Siemens an die Vermittlungs-Baugruppe PBX anschließbar sind. Des weiteren ist die Vermittlungs-Baugruppe PBX über eine ISDN-orientierte Netzanschlußeinheit N-AE mit einem ISDN-Kommunikationsnetz verbunden. Die Netzanschlußeinheit N-AE umfaßt 2 S₀-Schnittstellen, die jeweils 2 Nutzdatenkanäle, welche als ISDN-orientierte B-Kanäle mit einer Datenübertragungsrate von 64 kBit/s ausgestaltet sind und zum anderen einen Signalisierungskanal, welcher als ISDN-orientierter D-Kanal mit einer Übertragungsrate von 16 kBit/s ausgestaltet ist, umfassen.

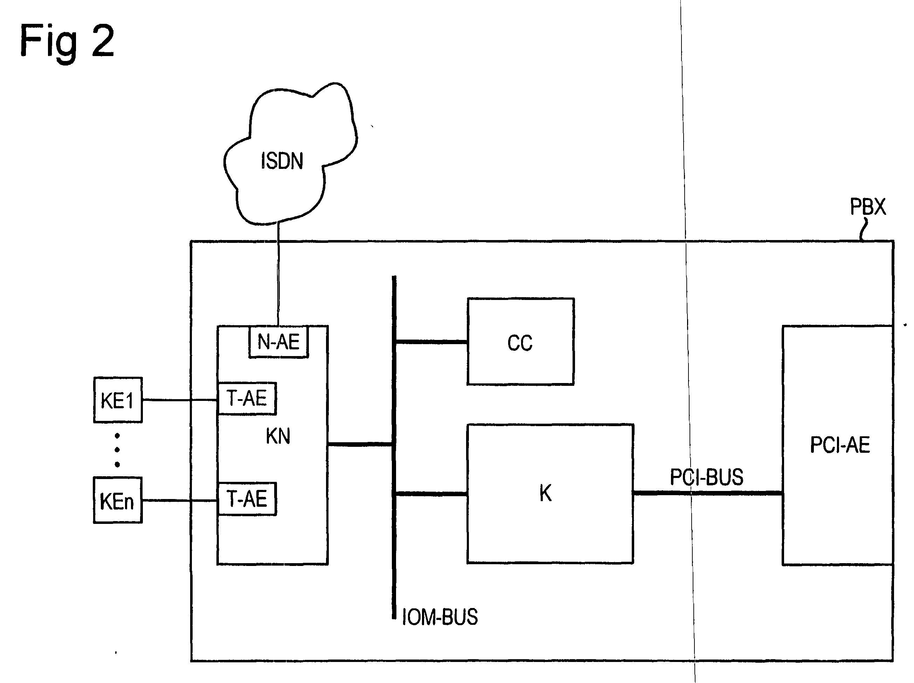

Fig 2 zeigt eine schematische Darstellung der wesentlichen Funktionseinheiten der Vermittlungs-Baugruppe PBX. Die Vermittlungs-Baugruppe PBX weist ein Koppelfeldmodul KN mit Teilnehmeranschlußeinheiten T-AE und einer ISDN-orientierten Netzanschlußeinheit N-AE auf. Über die Teilnehmeranschlußeinheiten T-AE sind die Kommunikationsendgeräte KE1,...,KEn mit dem Koppelfeldmodul KN verbunden. Über die Netzanschlußeinheit N-AE ist das Koppelfeldmodul KN mit dem ISDN-orientierten Kommunikationsnetz ISDN verbunden.

Des weiteren weist die Vermittlungs-Baugruppe PBX eine Steuereinheit CC und eine Kopplungseinheit K auf, die über einen 8-Bit breiten, baugruppeninternen, vermittlungsorientierten Datenbus IOM-BUS (ISDN Oriented Modular) mit dem Koppelfeldmodul KN verbunden sind. Über den vermittlungsorientierten Datenbus IOM-BUS werden die zu übermittelnden Nutzdaten und Signalisierungsinformationen in Form von ISDN-orientierten Bund D-Kanälen übertragen. Anhand der übermittelten Signalisierungsinformation erfolgt durch die Steuereinheit CC die Steuerung des Koppelfeldmoduls KN, d.h. die vermittlungstechnische Verknüpfung von Eingangs- und Ausgangsleitungen des Koppelfeldmoduls KN.

Die Kopplungseinheit K ist andererseits über einen weiteren 32-Bit breiten Datenbus PCI-BUS (Peripheral Component Interconnect) und über eine Anshlußeinheit PCI-AE mit dem zentralen Bussystem - insbesondere einem PCI-Bus - des Personal Computers PC verbindbar. Durch die Kopplungseinheit K erfolgt eine bidirektionale Umsetzung zwischen dem Datenformat des vermittlungsorientierten Datenbusses IOM-BUS und dem Datenformat des zentralen Bussystems PCI-BUS. Alternativ kann die Kopplungseinheit K über die Anschlußeinheit PCI-AE mit einem ISA-Bussystem des Personal Computers PC verbunden sein. In diesem Fall erfolgt durch die Kopplungseinheit K eine bidirektionale Umsetzung zwischen dem Datenformat des vermittlungsorientierten Datenbusses IOM-BUS und dem Datenformat des ISA-Bussystems.

Für auf dem Personal Computer PC laufende Anwendungen, in deren Rahmen eine Datenübertragung über das ISDN-orientierte Kommunikationsnetz ISDN verlaßt wird, wie z.B. ein Datentransfer auf Basis des IP-Protokolls (Internet Protokoll) ist über den weiteren Datenbus PCI-BUS eine Übertragungskapazität für 2 ISDN-orientierte B-Kanäle - dies entspricht einer Übertragungskapazität von 128 kBit/s - vorgesehen. Durch diese Begrenzung der Übertragungskapazität wird sichergestellt, daß bei einem vom Personal Computer PC veranlaßten Datentransfer unter Beteiligung beider Nutzdatenkanäle (B-Kanäle) einer S₀-Schnittstelle der Netzanschlußeinheit N-AE, ein Einleiten eines Verbindungsaufbaus von zu einem an der Vermittlungs-Baugruppe PBX angeschlossenem Kommunikationsendgerät KE1,...,KEn über die zweite S₀-Schnittstelle der Netzanschlußeinheit N-AE möglich ist..

Eine Steuerung der Datenübermittlung über das ISDN-orientierte Kommunikationsnetz ISDN im Rahmen von auf dem Personal Computer PC laufende Anwendungen erfolgt durch den Personal Computer PC über sogenannte CAPI-Teiber (Common ISDN Application Programming Interface). Die CAPI-Schnittstelle ist eine standardisierte Softwareschnittstelle für eine im Rahmen von PC-Anwendungen veranlaßte Datenübertragung über eine ISDN-orientierte Übertragungsstrecke.

## Patentansprüche

1. Vermittlungs-Baugruppe (PBX)
mit einer Anschlußeinrichtung (PCI-AE) zu einem zentralen Bussystem (PCI-BUS) einer Datenverarbeitungseinrichtung (PC), mit einem Koppelfeldmodul (KN) zum Anschluß an ein Telekommunikationsnetz (ISDN),
mit einer, einerseits über einen vermittlungsorientierten Datenbus (IOM-BUS) mit dem Koppelfeldmodul (KN) verbundenen und andererseits über die Anschlußeinrichtung (PCI-AE) an das zentrale Bussystem (PCI-BUS) anschließbaren Kopplungseinheit (K) zur bidirektionalen Umsetzung zwischen einem Datenformat des vermittlungsorientierten Datenbusses (IOM-BUS) und einem Datenformat des zentralen Bussystems (PCI-BUS)
**dadurch gekennzeichnet,**
**dass** über das zentrale Bussystem (PCI-BUS) eine Datenübermittlungsrate für 2 ISDN-orientierte Nutzdatenkanäle (B-Kanäle) vorgesehen sind,
wobei eine Steuerung der Datenübermittlung über die Datenverarbeitungseinrichtung (PC) über einen CAPI-Treiber steuerbar ist.

2. Baugruppe nach Anspruch 1,
**dadurch gekennzeichnet,**
**daß** der vermittlungsorientierte Datenbus (IOM-BUS) ein 8-Bit breiter ISDN-orientierter IOM-Datenbus (ISDN Oriented Modular) ist.

3. Baugruppe nach Anspruch 1 oder 2,
**dadurch gekennzeichnet,**
**daß** das zentrale Bussystem (PCI-BUS) ein 32-Bit breiter PCI-Datenbus (Peripheral Component Interconnect) ist.

4. Baugruppe nach einem der vorhergehenden Ansprüche,
**dadurch gekennzeichnet,**
**daß** die Kopplungseinheit (K) über einen 16-Bit breiten ISA-Datenbus (Industry Standard Architecture) mit dem zentralen Bussystem (PCI-BUS) verbunden ist.

5. Baugruppe nach einem der vorhergehenden Ansprüche,
**dadurch gekennzeichnet,**
**daß** das Koppelfeldmodul (KN) mindestens einen Teilnehmeranschluß (T-AE) zum Anschluß eines Kommunikationsendgerätes (KE1,...,KEn) aufweist.

## Claims

1. Private exchange card (PBX)
comprising an interface device (PCI-AE) to a central bus system (PCI-BUS) of a data processing device (PC),
a switching matrix module (KN) for connecting to a telecommunications network (ISDN),
a communications unit (K), which is connected on the one hand to the switching matrix module (KN) via a switching-oriented data bus (IOM-BUS), and can be connected on the other hand to the central bus system (PCI-BUS) via the interface device (PCI-AE), for bi-directional conversion between a data format of the switching-oriented data bus (IOM-BUS) and a data format of the central bus system (PCI-BUS),
**characterized in that**
a data transmission rate for two ISDN-oriented user-data channels (B-channels) is provided via the central bus system (PCI-BUS),
where data transmission via the data processing device (PC) can be controlled via a CAPI driver.

2. Card according to Claim 1,
**characterized in that**
the switching-oriented data bus (IOM-BUS) is an 8-bit wide, ISDN-oriented IOM data bus (IOM = ISDN Oriented Modular).

3. Card according to Claim 1 or 2,
**characterized in that**
the central bus system (PCI-BUS) is a 32-bit wide PCI data bus (PCI = Peripheral Component Interconnect).

4. Card according to any of the preceding claims,
**characterized in that**
the communications unit (K) is connected to the central bus system (PCI-BUS) via a 16-bit wide ISA data bus (ISA = Industry Standard Architecture),

5. Card according to any of the preceding claims,
**characterized in that**
the switching matrix module (KN) comprises at least one subscriber line (T-AE) for connecting a communications terminal (KEl, ... ,KEn) .

## Revendications

1. Module commutateur (PBX)
ayant un dispositif de raccordement (PCI-AE) vers un système de bus central (PCI-BUS) d'un dispositif de traitement de données (PC),
ayant un module formant réseau de connexion (KN) pour le raccordement à un réseau de télécommunications (RNIS),
ayant une unité de connexion (K), reliée d'une part au module formant réseau de connexion (KN) par l'intermédiaire d'un bus de données orienté commutation (IOM-BUS) et raccordable d'autre part au système de bus central (PCI-BUS) par l'intermédiaire du dispositif de raccordement (PCI-AE), pour la conversion bidirectionnelle entre un format de données du bus de données orienté commutation (IOM-BUS) et un format de données du système de bus central (PCI-BUS),
**caractérisé par le fait que**,
par l'intermédiaire du système de bus central (PCI-BUS), il est prévu un débit de transmission de données pour 2 canaux de données utiles orientés RNIS (canaux B),
une commande de la transmission de données par l'intermédiaire du dispositif de traitement de données (PC) étant commandable par l'intermédiaire d'un pilote CAPI.

2. Module selon la revendication 1,
**caractérisé par le fait que** le bus de données orienté commutation (IOM-BUS) est un bus de données IOM orienté RNIS (ISDN Oriented Modular) large de 8 bits.

3. Module selon la revendication 1 ou 2,
**caractérisé par le fait que** le système de bus central (PCI-BUS) est un bus de données PCI (Peripheral Component Interconnect) large de 32 bits.

4. Module selon l'une des revendications précédentes,
**caractérisé par le fait que** l'unité de connexion (K) est reliée par l'intermédiaire d'un bus de données ISA (Industry Standard Architecture) large de 16 bits au système de bus central (PCI-BUS).

5. Module selon l'une des revendications précédentes,
**caractérisé par le fait que** le module formant réseau de connexion (KN) comporte au moins un raccordement d'abonné (T-AE) pour le raccordement d'un terminal de communication (KEI à KEn).
